# EUROPEAN PATENT SPECIFICATION

(11) **EP 1 222 831 B1**
(45) Date of publication and mention of the grant of the patent: **13.09.2006**
(21) Application number: 00971917.0
(22) Date of filing: 03.10.2000
(51) Int. Cl.: H04Q 7/38

(54) **RAPID HANDOVER OF A MOBILE STATION BETWEEN RADIO NETWORK CONTROLLERS ENABLING ACCESS OF THE MOBILE STATION TO AN ENHANCED GENERAL PACKET RADIO SERVICE (EGPRS) NETWORK**
SCHNELLES WEITERREICHEN EINER MOBILSTATION ZWISCHEN RNCs, WELCHE DEN ZUGRIFF DER MOBILSTATION AUF EIN EGPRS-NETZ ERMÖGLICHEN
TRANSFERT RAPIDE D'UNE STATION MOBILE ENTRE DES CONTROLEURS DE RESEAUX RADIO PERMETTANT L'ACCES DE LA STATION MOBILE A UN RESEAU DE TYPE EGPRS

(30) Priority: 18.10.1999 US 160240 P; 20.06.2000 US 597133
(43) Date of publication of application: 17.07.2002
(73) Proprietor: TELEFONAKTIEBOLAGET LM ERICSSON (publ), 164 83 Stockholm (SE)
(72) Inventor: BALACHANDRAN, Kumar, Cary, NC 27511 (US); GALYAS, Peter, S-183 52 Täby (SE); YARED, Marlene, Dollard-des-Ormeaux, Quebec H9G 1J1 (CA); ADAMS, Martin, 52064 Aachen (DE); BERTRAND, Jean-François, Montreal, Quebec H2P 2K3 (CA)
(74) Representative: HOFFMANN EITLE
(86) International application number: PCT/SE2000/001908
(87) International publication number: WO 2001/030107

(56) References cited:
- WO-A-00/79808
- US-A- 5 913 167
- US-A- 6 119 007
- US-A- 6 131 030

## Description

### BACKGROUND OF THE INVENTION

### Technical Field of the Invention

This invention relates to telecommunication systems and, more particularly, to a method of rapid handover of a mobile station between radio network controllers accessing an Enhanced General Packet Radio Service (EGPRS) network.

### Description of Related Art

The General Packet Radio Service (GPRS) is a packet-switched network for the transfer of high-speed and low-speed data and signaling between mobile stations (MSs) and other terminal equipment. The MSs may access the GPRS network through various Radio Access Networks (RANs). Althought GPRS was orignally designed to operate with the Global System for Mobile Communications (GSM), strict separation is maintained between the RAN and the core GPRS network, allowing the core GPRS network to be reused with other radio access technologies.

Enhanced GPRS (EGPRS) networks are enhanced with a technology called Enhanced data rates for GSM Evolution (EDGE). In such networks, MSs access the EGPRS network through an EGPRS Radio Access Network (ERAN), and the controlling entity within the EGPRS network is an Enhanced Serving GPRS Service Node (ESGSN). Various interfaces are now being defined between the ERAN and the EGPRS network. The GSM 2.5 standard defined an interface based on the Gb interface and frame relay, while the Universal Mobile Telecommunications Systems (UMTS) standard (a third generation cellular standard relating to the evolution of GSM and EDGE) defined an IP-based interface utilizing the Iu interface. EDGE has defined the Iu-PS' interface which is a packet-switched interface related to the UMTS Iu interface.

Document US-A-5 913 167 discloses a GSM system wherein a mobile communication unit is provided by its currently serving base station with a list of reserved traffic channels associated with neighbouring base stations. In this way, a reservation of radio resources in potential target base stations permits the communication to be transferred from a first (serving) base station to a second (neighbouring) base station even in the case of a communication link interruption, so as to mitigate a dropped call.

WO-A-0079808, which represents prior art pursuant to Art. 54(3) EPC, describes a method of handing over mobile stations in a general packet radio service (GPRS) radio telecommunications network. From this document it is not known, that the mobile station accesses an enhanced general packet radio service network.

The existing and proposed interfaces between the ERAN and the EGPRS network, experience excessive handover delay when handing over a mobile station from one Radio Network Controller (RNC) to another within the ERAN. The resultant interruption time is a serious problem for real-time applications which are delay-sensitive.

### SUMMARY OF THE INVENTION

It is the object of the invention to provide a handover method, and a radio access network for use with the method that reduces the interruption time during inter-RNC handover to a level that is acceptable for real-time applications. The present invention presents such a method and radio access network as defined in claims 1 and 17, respectively.

In one aspect, the present invention is a method of rapid handover of a mobile station between a Source Radio Network Controller (SRNC) and a Target Radio Network Controller (TRNC) in a Radio Access Network through which the mobile station accesses an Enhanced General Packet Radio Service (EGPRS) network. The mobile station is involved in an on-going call transferring Packet Data Units (PDUs) through the EGPRS network via the SRNC. The method includes the steps of notifying the TRNC by the SRNC that relocation of the mobile station to the TRNC is requested; reserving by the TRNC, radio resources required to serve the mobile station in the TRNC; and notifying the SRNC by the TRNC that relocation of the mobile station to the TRNC is approved. An Iux interface maybe established between the SRNC and the TRNC for direct communication of control signaling. Alternatively, the control signaling between the SRNC and the TRNC may pass through the EGPRS network. This is followed by notifying the EGPRS network that a handover is taking place from the SRNC to the TRNC. The EGPRS then begins bi-casting PDUs to both the SRNC and the TRNC until notified by the TRNC that the handover is complete. The mobile station is then handed over to the TRNC, and the EGPRS network is notified by the TRNC that the handover is complete.

In another aspect, the present invention is a Radio Access Network (RAN) for providing mobile stations with access to an EGPRS network, as defined in Claim 17.

### BRIEF DESCRIPTION OF THE DRAWINGS

The invention will be better understood and its numerous objects and advantages will become more apparent to those skilled in the art by reference to the following drawings, in conjunction with the accompanying specification, in which:
FIG. 1 is a simplified block diagram of an EGPRS Radio Access Network (ERAN) in which the lux interface of the present invention has been implemented;
FIG. 2 is a signal flow diagram illustrating the flow of messages when performing an inter-RNC handover of a mobile station in a first embodiment of the method of the present invention when the Iux interface is not implemented in the ERAN; and
FIG. 3 is a signal flow diagram illustrating the flow of messages when performing an inter-RNC handover of a mobile station in a second embodiment of the method of the present invention when the lux interface is implemented in the ERAN.

### DETAILED DESCRIPTION OF EMBODIMENTS

The present invention is method of reducing the handover delay and the interruption time when handing over a mobile station from a Source RNC (SRNC) to a Target RNC (TRNC) in an EGPRS Radio Access Network (ERAN). As noted above, it is critical for delay-sensitive, real-time applications that the interruption time be minimized.

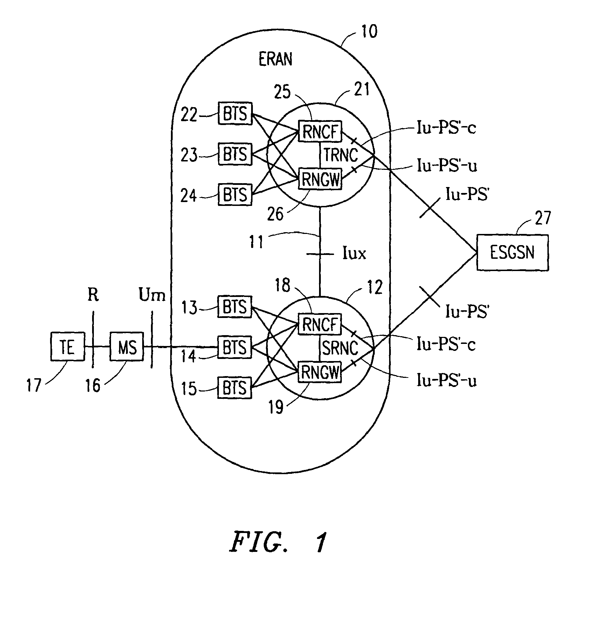

FIG. 1 is a simplified block diagram of an ERAN 10 in which the Iux interface 11 of the present invention has been implemented. The ERAN includes an SRNC 12 which controls base transceiver stations (BTSs) 13-15. BTS 14 is currently serving a mobile station (MS) 16 which is operating with terminal equipment (TE) 17. Functionally, the SRNC includes a Radio Network Control Function (RNCF) 18 and a Radio Network Gateway (RNGW) 19. Control signaling passes through the RNCF while user (payload) information passes through the RNGW.

Also illustrated in FIG. 1 is a TRNC 21 to which the MS 16 is being handed over. The TRNC controls BTSs 22-24. Like the SRNC, the TRNC functionally includes an RNCF 25 and an RNGW 26. The SRNC 12 and the TRNC 21 are connected with the new Iux interface 11. Both the SRNC and the TRNC are connected to the core EGPRS network (represented by the ESGSN 27) through an Iu-PS' interface. Within each RNC, the Iu-PS' interface is divided into a control interface (Iu-PS'-C) which interfaces with the RNCF, and a user interface (Iu-PS'-U) which interfaces with the RNGW.

The Iux interface 11 is normally utilized to transfer control signaling rather than payload information from the SRNC to the TRNC. In certain circumstances, however, payload information may also be transferred over the lux interface. For example, for loss-sensitive traffic, PDUs may be queued in the SRNC during the handover interruption, and then forwarded to the TRNC. Since it would be inefficient to relay those PDUs via the core network, the Iux interface may be used to transfer queued PDUs to the TRNC.

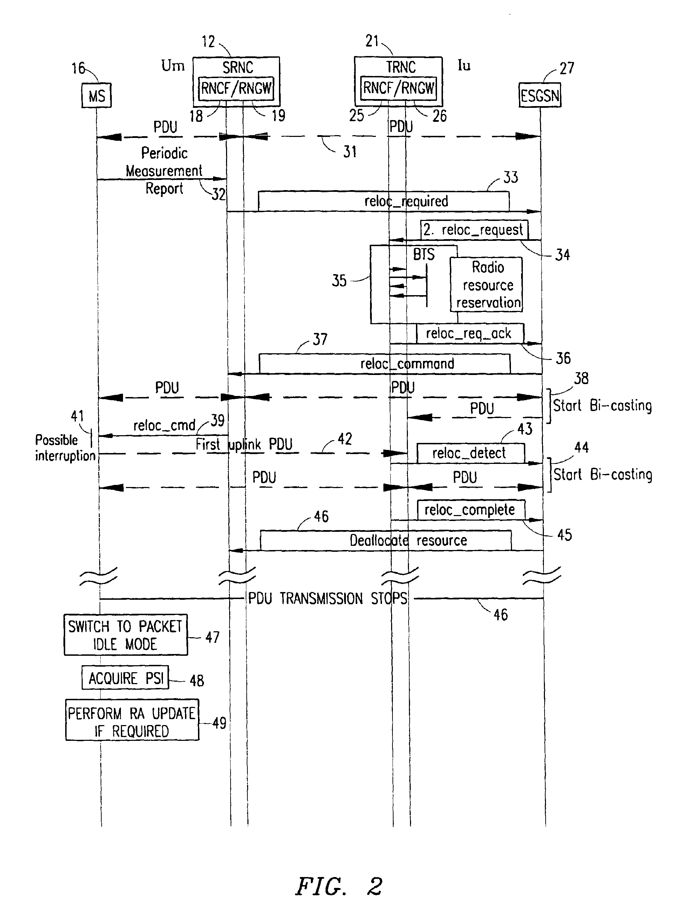

FIG. 2 is a signal flow diagram illustrating the flow of messages when performing an inter-RNC handover of the MS 16 from SRNC 12 to TRNC 21 in a first embodiment of the method of the present invention when the Iux interface is not implemented in the ERAN 10. There are 2 vertical lines below the SRNC and the TRNC, representing signaling in the control plane and the user plane. The control plane signaling is shown to pass through the RNCF 18 in the SRNC, and through the RNCF 25 in the TRNC. The user (payload) information passes through the RNGW 19 in the SRNC, and through the RNGW 26 in the TRNC. The ESGSN 27 represents the core EGPRS network.

At 31, a PDU (packet) transmission is in process. The MS 16 sends periodic measurement reports 32 to the SRNC 12 regarding the radio conditions. At some point, the signal strength gets weak enough to initiate a handover to another cell. If there is no Iux interface, a Relocation Required message 33 is sent from the SRNC to the ESGSN and identifies the TRNC. The ESGSN sends a Relocation Request 34 to the identified TRNC. At 35, the TRNC performs a radio resource reservation procedure in order to speed up the handover process by identifying and reserving the necessary radio resources ahead of time. The TRNC determines the availability of radio resources required to serve the MS in the TRNC, and reserves the resources if they are available.

When the radio resources are reserved, the TRNC sends a Relocation Request Acknowledgment message 36 back to the ESGSN. The ESGSN then sends a Relocation Command message 37 to the SRNC. Both the Relocation Request Acknowledgment message and the Relocation Command are enhanced to carry information about the target cell resources that were reserved, the time slot on which transmission will be continued, and any other information needed by the MS for the radio access in the target cell.

If the TRNC determines that radio resources are not available, a failure indication is returned to the ESGSN in the Relocation Request Acknowledgment message 36. The ESGSN, in turn, sends the failure indication to the SRNC in the Relocation Command message 37. The SRNC then determines from the periodic measurement reports 32 which TRNC is the next best candidate for handover. The next best TRNC is then selected, and the process is repeated until the SRNC finds a TRNC capable of serving the MS, or it has to drop/drag the call.

The relocation signaling through this point does not have any impact on PDU transmission, which continues through all of these steps. Assuming 30 ms per message and 50 ms for the radio resource reservation procedure, a total of approximately 170 ms is spent preparing the network for handover.

After the Relocation Command message 37 is sent, the ESGSN starts bi-casting the PDUs to both the SRNC and the TRNC at 38. This minimizes any interruption in the packet flow when the handover takes place. The SRNC then sends a Relocation Command message 39 to the MS, providing all of the control information needed by the MS to effectuate the handover (timing advance, time slot, uplink and downlink channels, triggering event, Temporary Flow Identifier, etc.). Approximately 20-40 ms is required to send the Relocation Command.

The MS then leaves its serving cell and enters the target cell. There is a possible interruption of 20-60 ms during the time that the actual switching is performed for the handover at 41 due to cell-switching and re-synchronization, if needed. In an alternative embodiment, the TRNC may buffer PDUs during the interruption to minimize packet loss. However, real-time applications are more delay-sensitive than they are loss-sensitive, and therefore there is no buffering in the preferred embodiment. When the first uplink PDU is sent from the MS to the TRNC at 42, it triggers a handover detection in the TRNC, and causes the TRNC to send a Relocation Detect message 43 to the ESGSN. This requires about 30 ms. This causes the ESGSN to stop the bi-casting of the PDUs at 44, and send them only to the TRNC.

The handover is then complete, and a Relocation Complete message 45 is sent from the TRNC to the ESGSN, requiring approximately 30 ms. The ESGSN then sends a Deallocate Resource message 46 to the SRNC which makes the radio resources previously used by the MS available to other users. This message does not contribute to the handover delay/interruption.

The entire procedure takes about 330 ms with only about 60 ms of interruption for the actual switching. Even with a safety factor of two, to account for possible channel errors and ERAN congestion, a handover interruption time of less than 120 ms should be achievable under all reasonable circumstances.

At some later time, the data session ends, and PDU transmission stops at 46. The MS then switches from packet transfer mode to idle mode at 47, and begins acquisition of the Packet System Information (PSI) in the new cell at 48. The MS also realizes a possible Routing Area (RA) change and at 49, initiates an RA Update procedure, if required.

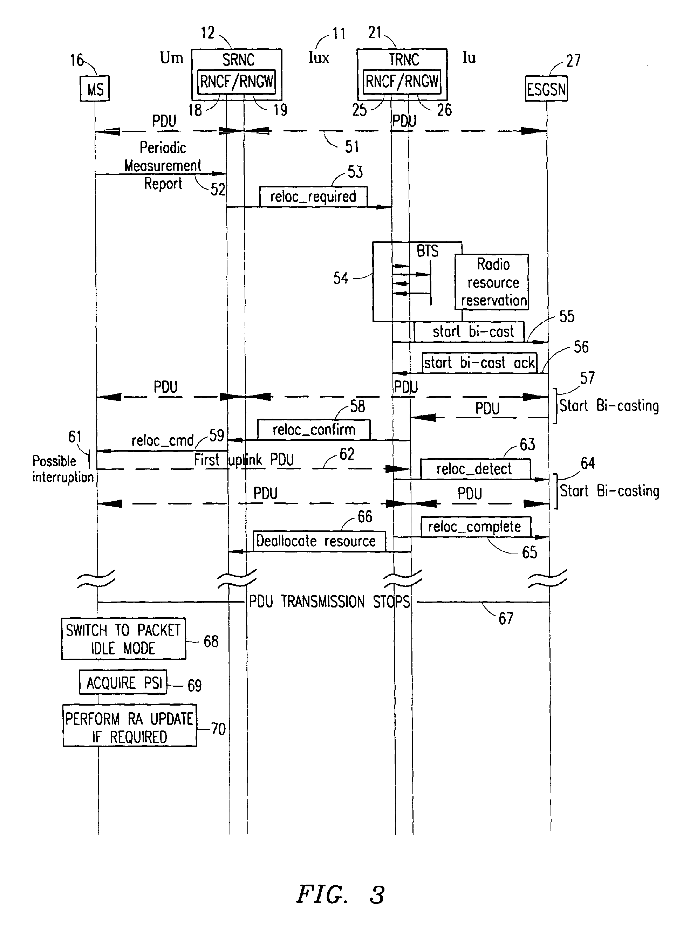

FIG. 3 is a signal flow diagram illustrating the flow of messages when performing an inter-RNC handover of the MS 16 from SRNC 12 to TRNC 21 in a second embodiment of the method of the present invention when the lux interface 11 is implemented in the ERAN 10. Like FIG. 2, signaling through the SRNC and the TRNC is identified as control plane signaling or user plane (payload) signaling.

At 51, a PDU (packet) transmission is in process. The MS 16 sends periodic measurement reports 52 to the SRNC 12 regarding the radio conditions. At some point, the signal strength gets weak enough to initiate a handover to another cell. Since the lux interface is implemented to carry control signals between the SRNC and the TRNC, a Relocation Required message 53 is sent from the SRNC directly to the TRNC using the Iux interface. At 54, the TRNC performs the radio resource reservation procedure in order to speed up the handover process by identifying and reserving the necessary radio resources ahead of time.

When the radio resources are reserved, the TRNC sends a Start Bi-casting Request message 55 to the ESGSN, and the ESGSN sends a Start Bi-casting Acknowledgment message 56 back to the TRNC. The ESGSN then starts bi-casting the PDUs to both the SRNC and the TRNC at 57 in order to minimize any interruption in the packet flow when the handover takes place. The TRNC then sends a Relocation Confirm message 58 to the SRNC over the Iux interface. The SRNC then sends a Relocation Command 59 to the MS, providing all of the control information needed by the MS to effectuate the handover.

Once again, there is a possible interruption of 20-60 ms during the time that the actual switching is performed for the handover at 61. When the first uplink PDU sent from the MS to the TRNC at 62, it triggers the TRNC to send a Relocation Detect message 63 to the ESGSN. This causes the ESGSN to stop the bi-casting of the PDUs at 64, and send them only to the TRNC. The handover is then complete, and a Relocation Complete message 65 is sent from the TRNC to the ESGSN. The TRNC then sends a Deallocate Resource message 66 over the Iux interface to the SRNC which makes the radio resources previously used by the MS available to other users.

Like the first embodiment, the entire procedure takes about 330 ms with only about 60 ms of interruption for the actual switching. Even with a safety factor of two, to account for possible channel errors and ERAN congestion, a handover interruption time of less than 120 ms should be achievable under all reasonable circumstances. Thus, the advantage that the lux interface offers is not in further reducing the handover delay, but rather in reducing the signaling load on the core EGPRS network, and in further separating radio access functionality from the core network.

If the first handover attempt fails, for example because the TRNC does not succeed in its attempt to reserve radio resources, the Relocation Confirm message includes an indication of failure. The SRNC then repeats the same procedure with other TRNCs until it finds a TRNC capable of serving the MS, or it has to drop/drag the call. The lux interface is very efficient in this scenario since a significant number of messages do not have to go through the core EGPRS network.

At some later time, the data session ends, and PDU transmission stops at 67. The MS then switches from packet transfer mode to idle mode at 68, and begins acquisition of the Packet System Information (PSI) in the new cell at 69. The MS also realizes a possible Routing Area (RA) change and at 70, initiates an RA Update procedure, if required.

It is thus believed that the operation and construction of the present invention will be apparent from the foregoing description. While the ERAN and method shown and described has been characterized as being preferred, it will be readily apparent that various changes and modifications could be made therein without departing from the scope of the invention as defined in the following claims.

## Claims

1. A method of rapid handover of a mobile station (16) between a Source Radio Network Controller SRNC (12) and a Target Radio Network Controller TRNC (21) in a Radio Access Network (10) through which the mobile station (16) accesses an Enhanced General Packet Radio Service network herein called EGPRS network (27), said mobile station being involved in an on-going call transferring Packet Data Units through the EGPRS network via the SRNC (12), said method comprising the steps of:
notifying (33, 34, 53) the TRNC (21) by the SRNC (12) that relocation of the mobile station (16) to the TRNC (21) is requested;
reserving (35, 54) by the TRNC (21) radio resources required to serve the mobile station (16) in the TRNC (21);
notifying (36, 37, 58) the SRNC (12) by the TRNC (21) that relocation of the mobile station (16) to the TRNC (21) is approved;
notifying (43, 63) the EGPRS network (27) that a handover is taking place from the SRNC (12) to the TRNC (21);
bi-casting (38, 44, 57, 64) packet data units by the EGPRS network to both the SRNC (12) and the TRNC (21) until notified by the TRNC (21) that the handover is complete;
handing over (62, 42) the mobile station (16) to the TRNC (21); and
notifying (45, 65) the EGPRS network by the TRNC (21) that the handover is complete.

2. The method of rapid handover of claim 1, wherein the step of notifying the TRNC (21) by the SRNC (12) that relocation of the mobile station to the TRNC is requested includes the steps of:
sending a relocation required message (33) from the SRNC to the EGPRS network (27); and
sending a relocation request message (34) from the EGPRS network (27) to the TRNC.

3. The method of rapid handover of claim 2, wherein the step of notifying the SRNC (12) by the TRNC (21) that relocation of the mobile station to the TRNC is approved includes the steps of:
sending a relocation request acknowledgment message (36) from the TRNC (21) to the EGPRS network (27); and
sending a relocation command message (37) from the EGPRS network (27) to the SRNC (12).

4. The method of rapid handover of claim 1, wherein the step (54) of reserving radio resources by the TRNC (21) includes the steps of:
determining whether radio resources are available in the TRNC to serve the mobile station; and
reserving the radio resources required to serve the mobile station (16) in the TRNC (21) upon determining that the radio resources are available.

5. The method of rapid handover of claim 4, further comprising, after the step (35, 54) of determining whether radio resources are available in the TRNC to serve the mobile station, the step of notifying the SRNC (12) by the TRNC (21) that the handover attempt failed, upon determining that the radio resources are not available in the TRNC (21).

6. The method of rapid handover of claim 5, further comprising, after the step of notifying the SRNC (12) that the handover attempt failed, the steps of:
selecting by the SRNC (12), a second TRNC (21) which is a next best candidate for handover of the mobile station (16); and
attempting to handover the mobile station (16) to the second TRNC (21).

7. The method of rapid handover of claim 1, further comprising, before the step of handing over the mobile station, the step of sending, from the SRNC (12) to the mobile station, information required by the mobile station (16) for handover.

8. The method of rapid handover of claim 1, wherein the step of notifying the EGPRS network (27) by the TRNC (21) that the handover is complete includes sending a relocation detect message (43, 63) to the EGPRS network (27) when a first uplink PDU (42, 62) is received from the mobile station (16) by the TRNC (21).

9. The method of rapid handover of claim 1, further comprising the step (46, 66) of instructing the SRNC (12) to deallocate any radio resources that were being utilized by the mobile station (16) in the SRNC (12) prior to the handover.

10. The method of rapid handover of claim 1, wherein an Iux interface (11) is established between the SRNC (12) and the TRNC (21) for passing control signaling, and the step (53) of notifying the TRNC (21) by the SRNC (12) that relocation of the mobile station (16) to the TRNC (21) is requested includes sending a relocation required message (53) directly from the SRNC (12) to the TRNC (21) over the lux interface (11).

11. The method of rapid handover of claim 10, wherein the step (58) of notifying the SRNC (12) by the TRNC (21) that relocation of the mobile station (16) to the TRNC (21) is approved includes sending a relocation confirm message (58) directly from the TRNC (21) to the SRNC (12) over the Iux interface (11).

12. The method of rapid handover of claim 1 further comprising the steps of:
ending the call;
switching (47, 68) the mobile station to packet-idle mode;
acquiring (48, 69) Packet System Information (PSI) by the mobile station (16) in its new cell; and
initiating (70) a Routing Area Update procedure by the mobile station, if required.

13. The method of rapid handover of claim 1, comprising the steps of:
implementing an Iux interface (11) between the SRNC and the TRNC for passing control signaling;
the SRNC (12) notifying (53) the TRNC (21) that relocation of the mobile station (16) to the TRNC (21) is requested by sending a relocation required message directly from the SRNC (12) to the TRNC (21) over the lux interface (11);
determining (54) whether radio resources are available in the TRNC (21) to serve the mobile station (16);
the radio resources required to serve the mobile station in the TRNC being reserved (54) upon determining that the radio resources are available; and
the TRNC (21) notifying the SRNC (12) that relocation of the mobile station (16) to the TRNC (21) is approved by sending a relocation confirm message (58) directly from the TRNC (21) to the SRNC (12) over the Iux interface (11); and
sending, from the SRNC (12) to the mobile station (16), information required by the mobile station for handover.

14. The method of rapid handover of claim 13 further comprising:
instructing the SRNC to deallocate any radio resources that were being utilized by the mobile station in the SRNC prior to the handover by sending a deallocate resources message directly from the TRNC to the SRNC over the lux interface.

15. The method of rapid handover of claim 13 further comprising, after the step of determining whether radio resources are available in the TRNC (21) to serve the mobile station (16), the steps of:
notifying the SRNC that the handover attempt failed, upon determining that radio resources are not available in the TRNC to serve the mobile station;
selecting by the SRNC, a second TRNC which is a next best candidate for handover of the mobile station; and
attempting to handover the mobile station to the second TRNC.

16. The method of rapid handover of claim 13 further comprising the steps of:
ending the call;
switching the mobile station to packet-idle mode (68);
acquiring (69) Packet System Information (PSI) by the mobile station (16) in its new cell; and
initiating a Routing Area Update procedure (70) by the mobile station (16), if required.

17. A Radio Access Network for providing mobile stations with access to an Enhanced General Packet Radio Service Network hereinafter called EGPRS network, said Radio Access Network comprising:
a source Radio Network Controller SRNC (12) for providing service to the mobile stations through at least one Base Transceiver Station BTS (13 to 15);
a Target Radio Network Controller TRNC (21) that provides service to the mobile stations through at least one BTS (22 to 24); and
means for notifying (33, 34, 53) the TRNC (21) by the SRNC (12) that relocation of the mobile station (16) to the TRNC (21) is requested;
means for reserving (35, 54) by the TRNC (21), radio resources required to serve the mobile station (16) in the TRNC (21);
means for notifying (36, 37, 58) the SRNC (21) by the TRNC that relocation of the mobile station (16) to the TRNC (21) is approved;
means for notifying (43, 63) the EGPRS network (27) that a handover is taking place from the SRNC (12) to the TRNC (21);
means for bi-casting (38, 44, 37, 64) packet data units by the EGPRS network to both the SRNC (12) and the TRNC (21) until notified by the TRNC (21) that the handover is complete;
means for handing over (62, 42) the mobile station (16) to the TRNC (21); and
means for notifying (45, 65) the EGPRS network by the TRNC (21) that the handover is complete.

18. The Radio Access Network of claim 17, comprising an lux interface (11) and adapted to pass relocation messages between the SRNC (12) and the TRNC (21) through the Iux interface (11) when one of the mobile stations is handed over from the SRNC (12) to the TRNC (21).

19. The Radio access Network of claim 18, wherein the lux interface (11) also passes payload information between the SRNC (12) and the TRNC (21).

20. The Radio Access Network of claim 19, wherein the SRNC (12) includes means for buffering Packet Data Units during a handover interruption period, and for forwarding the buffered Packet Data Units to the TRNC (21) after handover of the mobile station (16) is complete.

## Patentansprüche

1. Verfahren zur schnellen Übergabe eines Mobilfunkgeräts (16) zwischen einem Source-Radio-Network-Controller SRNC (12) und einem Target-Radio-Network-Controller TRNC (21) in einem Funkzugriffsnetzwerk (10), durch das das Mobilfunkgerät (16) auf ein Enhanced-General-Packet-Radio-Service Netzwerk (27), hier bezeichnet als EGPRS, zugreift, wobei das Mobilfunkgerät an einem andauernden Anruf beteiligt ist, der Paketdateneinheiten durch das EGPRS-Netzwerk über den SRMC (12) überträgt, wobei das Verfahren die Schritte umfasst:
Benachrichtigen (33, 34, 35) des TRNC (21) durch den SRNC (12), dass ein Standortwechsel des Mobilfunkgeräts an den TRNC (21) angefordert wurde;
Belegen (35, 54) von Funkressourcen durch den TRNC (21), die zum Bedienen des Mobilfunkgerätes (16) in dem TRNC (21) benötigt werden;
Benachrichtigen (36, 37, 58) des SRNC (12) durch den TRNC (21), dass der Standortwechsel des Mobilfunkgeräts (16) an den TRNC (21) bestätigt wurde;
Benachrichtigen (43, 63) des EGPRS-Netzwerkes (27), dass eine Übergabe von dem SRNC (27) an den TRNC (21) stattfindet;
Bi-Senden (38, 44, 57, 64) von Paketdateneinheiten durch das EGPRS-Netzwerk an den SRNC (12) und den TRNC (21) bis durch den TRNC (21) benachrichtigt wird, dass die Übergabe vollständig ist;
Übergeben (62, 42) des Mobilfunkgerätes (16) an den TRNC (21) ; und
Benachrichtigen (45, 65) des EGPRS-Netzwerkes durch den TRNC (21), dass die Übergabe vollständig ist.

2. Verfahren der schnellen Übergabe nach Anspruch 1, wobei der Schritt des Benachrichtigens des TRNC (21) durch den SRNC (12), dass ein Standortwechsel des Mobilfunkgerätes an den TRNC (21) angefordert wurde, die Schritte umfast:
Senden einer benötigten Standortwechselnachricht (33) von dem SRNC an das EGPRS-Netzwerk (27);
Senden einer benötigten Standortwechselnachricht (34) von EGPRS-Netzwerk (27) an den TRNC.

3. Verfahren der schnellen Übergabe nach Anspruch 2, wobei der Schritt des Benachrichtigens des SRNC (12) durch den TRNC (21), dass der Standortwechsel des Mobilfunkgerätes an den TRNC (21) bestätigt ist, die Schritte umfasst:
Senden einer Standortwechselanforderungs-Bestätigungsnachricht (36) von den TRNC (21) an das EGPRS-Netzwerk (27); und
Senden einer Standortwechselbefehl-Nachricht (37) von dem EGPRS-Netzwerk (27) an den SRNC (12).

4. Verfahren der schnellen Übergabe nach Anspruch 1, wobei der Schritt (54) des Belegens von Funkressourcen durch den TRNC (21) die Schritte umfasst:
Bestimmen ob Funkressourcen in dem TRNC zum Bedienen des Mobilfunkgerätes verfügbar sind; und
Belegen der Funkressourcen, die zum Bedienen des Mobilfunkgerätes (16) in dem TRNC (21) benötigt werden, auf das Feststellen hin, dass die Funkressourcen verfügbar sind.

5. Verfahren der schnellen Übergabe nach Anspruch 4, weiter mit dem Schritt des Benachrichtigens des SRNC (12) durch den TRNC (21), nach dem Schritt (35, 54) des Bestimmens, ob Funkressourcen zum Bedienen des Mobilfunkgerätes in dem TRNC verfügbar sind, dass der Übergabeversuch gescheitert ist, auf das Bestimmen hin, dass keine Funkressourcen in dem TRNC (21) verfügbar sind.

6. Verfahren der schnellen Übergabe nach Anspruch 5, weiter mit den Schritten, nach dem Schritt des Benachrichtigens des SRNC (12), dass der Übergabeversuch gescheitert ist:
Auswählen eines zweiten TRNC (21) durch den SRNC (12), welcher der nächstbeste Kandidat zum Übergeben des Mobilfunkgerätes (16) ist; und
Versuchen der Übergabe des Mobilfunkgerätes (16) an den zweiten TRNC (21).

7. Verfahren der schnellen Übergabe nach Anspruch 1, weiter mit dem Schritt des Sendens von Information, die von dem Mobilfunkgerät (16) zur Übergabe benötigt wird, von dem SRNC (12) an das Mobilfunkgerät vor dem Schritt der Übergabe.

8. Verfahren der schnellen Übergabe nach Anspruch 1, wobei der Schritt des Benachrichtigens des EGPRS-Netzwerkes (27) durch den TRNC (21), dass die Übergabe vollständig ist, das Senden einer Standortwechselerfassungs-Nachricht (43, 63) an das EGPRS-Netzwerk (27) umfasst, wenn eine erste Uplink-PDU (42,62) von dem Mobilfunkgerät durch den TRNC (21) empfangen wurde.

9. Verfahren der schnellen Übergabe nach Anspruch 1, weiter mit dem Schritt (46, 66) des Anweisens des SRNC (12) jegliche Funkressourcen freizugeben, die durch das Mobilfunkgerät in dem SRNC (12) vor der Übergabe verwendet wurden.

10. Verfahren der schnellen Übergabe nach Anspruch 1, wobei eine Iux-Schnittstelle (11) zwischen dem SRNC (12) und dem TRNC (21) zum Weitergeben von Steuersignalen aufgebaut ist und der Schritt (53) des Benachrichtigens des TRNC (21) durch den SRNC (12), dass der Standortwechsel des Mobilfunkgerätes (16) an den TRNC (21) angefordert wurde, das Senden einer benötigten Standortnachricht (53) direkt von dem SRNC (12) an den TRNC (21) über die lux-Schnittstelle (11) umfasst.

11. Verfahren der schnellen Übergabe nach Anspruch 10, wobei der Schritt (58) des Benachrichtigens des SRNC (12) durch den TRNC (21), dass der Standortwechsel des Mobilfunkgerätes (16) an den TRNC (21) bestätigt wird, das Senden einer Standortbestätigungs-Nachricht (58) direkt von dem TRNC (21) an den SRNC (12) über die Iux-Schnittstelle (11) umfasst.

12. Verfahren der schnellen Übergabe nach Anspruch 1, weiter mit den Schritten:
Beendigen des Anrufs;
Schalten (47, 68) des Mobilfunkgerätes in den Paketleerlaufmodus;
Empfangen (48, 69) von Paketsysteminformation (PSI) durch das Mobilfunkgerät (16) in seiner neuen Zelle; und
Einleiten (70) eines Routingbereich-Aktualisierungsverfahrens durch das Mobilfunkgerät, falls benötigt.

13. Verfahren der schnellen Übergabe nach Anspruch 1, mit den Schritten:
Implementieren einer Iux-Schnittstelle (11) zwischen dem SRNC und dem TRNC zum Weitergeben von Steuersignalen;
dass der SRNC (12) den TRNC (53) benachrichtigt, dass ein Standortwechsel des Mobilfunkgerätes (16) an den TRNC (21) angefordert wird, durch Senden einer benötigten Standortnachricht direkt von dem SRNC (12) an den TRNC (21) über die Iux-Schnittstelle (11);
Bestimmen (54) ob Funkressourcen in dem TRBC (21) verfügbar sind, um das Mobilfunkgerät (16) zu bedienen;
die Funkressourcen, die zum Bedienen des Mobilfunkgerätes in dem TRNC benötigt werden, auf das Bestimmen hin, dass die Funkressourcen verfügbar sind, belegt werden; und
dass der TRNC (21) den SRNC (12) benachrichtigt, dass der Standortwechsel des Mobilfunkgerätes (16) an den TRNC (21) bestätigt ist, durch Senden einer Standortwechselbestätigungs-Nachricht (58) direkt von dem TRNC (21) an den SRNC (12) über die Iux-Schnittstelle (11); und
Senden von von dem Mobilfunkgerät für die Übergabe benötigter Information von dem SRNC (12) an das Mobilfunkgerät (16).

14. Verfahren der schnellen Übergabe nach Anspruch 13, weiter mit:
Anweisen des SRNC jegliche Funkressourcen freizugeben, die von dem Mobilfunkgerät in dem SRNC (12) vor der Übergabe verwendet wurden, durch Senden einer Ressourcenfreigabe-Nachricht direkt von dem TRNC an den SRNC über die Iux-Schnittstelle.

15. Verfahren der schnellen Übergabe nach Anspruch 13, weiter mit den Schritten, nach dem Schritt des Bestimmens, ob Funkressourcen in dem TRNC (21) verfügbar sind, um das Mobilfunkgerät (16) zu bedienen:
Benachrichtigen des SRNC, dass ein Übergabeversuch gescheitert ist, auf das Bestimmen hin, dass keine Funkressourcen zum Bedienen des Mobilfunkgerätes in dem TRNC verfügbar sind;
Auswählen eines zweiten TRNC durch den SRNC, welcher der nächstbeste Kandidat zum Übergeben des Mobilfunkgerätes ist; und
Versuchen das Mobilfunkgerät an den zweiten TRNC zu übergeben.

16. Verfahren der schnellen Übergabe nach Anspruch 13, weiter mit den Schritten:
Beendigen des Anrufs;
Schalten des Mobilfunkgerätes in den Paketleerlaufmodus (68) :
Empfangen (69) von Paketsysteminformation (PSI) durch das Mobilfunkgerät (16) in seiner neuen Zelle; und
Einleiten (70) eines Routingbereich-Aktualisierungsverfahrens durch das Mobilfunkgerät (16), falls benötigt.

17. Funkzugriffsnetzwerk zum Versorgen von Mobilfunkgeräten mit Zugriff auf ein Enhanced General Paket Radio Netzwerk, hier bezeichnet als EGPRS-Netzwerk, wobei das Funkzugriffsnetzwerk umfasst:
einen Source Radio Network Controller SRNC (12) zum Bereitstellen von Diensten für die Mobilfunkgeräte durch mindestens eine Base Transceiver Station BTS (13 bis 15);
einen Target Radio Network Controller TRNC (12) zum Bereitstellen von Diensten für die Mobilfunkgeräte durch mindestens eine BTS (22 bis 24);
eine Einrichtung zum Benachrichtigen (33, 34, 53) des TRNC (21) durch den SRNC (12), dass der Standortwechsel des Mobilfunkgerätes (16) an den TRNC (21) angefordert wird;
eine Einrichtung zum Belegen (35, 54) von Funkressourcen durch den TRNC (21), die zum Bedienen des Mobilfunkgerätes (16) in dem TRNC (21) benötigt werden;
eine Einrichtung zum Benachrichtigen (36, 37, 58) des SRNC (21) durch den TRNC, dass der Standortwechsel des Mobilfunkgerätes (16) an den TRNC (21) bestätigt ist;
eine Einrichtung zum Benachrichtigen (43, 63) des EGPRS-Netzwerkes (27), dass eine Übergabe von dem SRNC (12) an den TRNC (21) stattfindet;
eine Einrichtung zum Bi-Senden (38, 44, 57, 64) von Paketdateneinheiten durch das EGPRS-Netzwerk an den SRNC (12) und den TRNC (21) bis durch den TRNC (21) benachrichtigt wird, dass die Übergabe vollständig ist;
eine Einrichtung zum Übergeben (62, 42) des Mobilfunkgerätes (16) an den TRNC (21); und
eine Einrichtung zum Benachrichtigen (45, 65) des EGPRS-Netzwerkes durch den TRNC (21), dass die Übergabe vollständig ist.

18. Funkzugriffsnetzwerk nach Anspruch 17, mit einer Iux-Schnittstelle (11) und das angepasst ist, Standortnachrichten zwischen dem SRNC (12) und dem TRNC (21) durch die Iux-Schnittstelle (11) weiterzugeben, wenn eines der Mobilfunkgeräte von dem SRNC (12) an den TRNC (21) übergeben wird.

19. Funkzugriffsnetzwerk nach Anspruch 18, wobei die Iux-Schnittstelle (11) ebenso Nutzlastinformation zwischen dem SRNC (12) und dem TRNC (21) weitergibt.

20. Funkzugriffsnetzwerk nach Anspruch 19, wobei das SRNC (12) Einrichtungen zum Puffern von Paketdateneinheiten während eines Übergabeunterbrechungszeitraumes umfasst, und zum Weiterleiten der gepufferten Paketdateneinheiten an den TRNC (21), nachdem die Übergabe des Mobilfunkgerätes (16) vollständig ist.

## Revendications

1. Une méthode de transfert intercellulaire rapide d'une station mobile (16) entre un contrôleur de réseau radio source SRNC (12) et un contrôleur de réseau de radio cible TRNC (21) dans un réseau d'accès radio (10) à travers lequel la station mobile (16) accède à un réseau de service général de radiocommunication par paquets amélioré appelé réseau EGPRS (27), ladite station mobile étant impliquée dans un appel en cours transférant des unités de données par paquets PDU à travers le réseau EGPRS via le SRNC (12), ladite méthode comprenant les étapes de:
- avertir (33, 34, 53) le TRNC (21) par le SRNC (12) qu'une relocalisation de la station mobile (16) au TRNC (21) est demandée;
- réserver (35, 54) par le TRNC (21) des ressources radio requises pour servir la station mobile (16) dans le TRNC (21);
- avertir (36, 37, 58) le SRNC (12) par le TRNC (21) que la relocalisation de la station mobile (16) au TRNC (21) est approuvée;
- avertir (43, 63) le réseau EGPRS (27) qu'un transfert intercellulaire est en cours du SRNC (12) au TRNC (21) ;
- dupliquer l'envoi (38, 44, 57, 64) des unités de données par paquets par le réseau EGPRS à la fois au SRNC (12) et au TRNC (21) jusqu'à ce que le TRNC (21) avertisse que le transfert intercellulaire est complété;
- transférer intercellulairement (62, 42) la station mobile (16) au TRNC (21); et
- avertir (45, 65) le réseau EGPRS par le TRNC (21) que le transfert intercellulaire est complété.

2. La méthode de transfert intercellulaire rapide selon la revendication 1, dans laquelle l'étape d'avertir le TRNC (21) par le SRNC (12) qu'une relocalisation de la station mobile au TRNC est demandée inclut les étapes de:
- envoyer un message de relocalisation requise (33) du SRNC au réseau EGPRS (27); et
- envoyer un message de demande de relocalisation (34) du réseau EGPRS (27) au TRNC.

3. La méthode de transfert intercellulaire rapide selon la revendication 2, dans laquelle l'étape d'avertir le SRNC (12) par le TRNC (21) que la relocalisation de la station mobile au TRNC est approuvée inclut les étapes de:
- envoyer un accusé de réception de demande de relocalisation (36) du TRNC (21) au réseau EGPRS (27); et
- envoyer un message de commande de relocalisation (37) du réseau EGPRS (27) au SRNC (12).

4. La méthode de transfert intercellulaire rapide selon la revendication 1, dans laquelle l'étape (54) de réserver des ressources radio par le TRNC (21) inclut les étapes de:
- déterminer si les ressources radio sont disponibles dans le TRNC pour servir la station mobile; et
- réserver les ressources radio requises pour servir la station mobile (16) dans le TRNC (21) lorsqu'il est établi que les ressources radio sont disponibles.

5. La méthode de transfert intercellulaire rapide selon la revendication 4, comprenant en outre, après l'étape (35, 54) d'établir que les ressources radio sont disponibles dans le TRNC pour servir la station mobile, l'étape d'avertir le SRNC (12) par le TRNC (21) qu'une tentative de transfert intercellulaire a échoué, lorsqu'il est établi que les ressources radio ne sont pas disponibles dans le TRNC (21).

6. La méthode de transfert intercellulaire rapide selon la revendication 5, comprenant en outre, après l'étape d'avertir le SRNC (12) que la tentative de transfert intercellulaire a échoué, les étapes de:
- sélectionner par le SRNC (12), un second TRNC (21) qui est un prochain meilleur candidat pour effectuer un transfert intercellulaire de la station mobile (16); et
- tenter d'effectuer le transfert intercellulaire de la station mobile (16) au second TRNC (21).

7. La méthode de transfert intercellulaire rapide selon la revendication 1, comprenant en outre, avant l'étape de transférer intercellulairement la station mobile, l'étape d'envoyer, du SRNC (12) à la station mobile, des informations requises par la station mobile (16) pour un transfert intercellulaire.

8. La méthode de transfert intercellulaire rapide selon la revendication 1, dans laquelle l'étape d'avertir le réseau EGPRS (27) par le TRNC (21) que le transfert intercellulaire est complété inclut un envoi d'un message de détection de relocalisation (43, 63) au réseau EGPRS (27) lorsqu'une première PDU montante (42, 62) est reçue de la station mobile (16) par le TRNC (21).

9. La méthode de transfert intercellulaire rapide selon la revendication 1, comprenant en outre l'étape (46, 66) de donner instruction au SRNC (12) de désaffecter toutes ressources radio ayant été utilisées par la station mobile (16) dans le SRNC (12) avant le transfert intercellulaire.

10. La méthode de transfert intercellulaire rapide selon la revendication 1, dans laquelle une interface lux (11) est établie entre le SRNC (12) et le TRNC (21) pour faire passer des signaux de commande, et l'étape (53) d'avertir le TRNC (21) par le SRNC (12) qu'une relocalisation de la station mobile (16) au TRNC (21) est demandée inclut un envoi d'un message de relocalisation demandée (53) directement du SRNC (12) au TRNC (21) par l'interface lux (11).

11. La méthode de transfert intercellulaire rapide selon la revendication 10, dans laquelle l'étape (58) d'avertir le SRNC (12) par le TRNC (21) que la relocalisation de la station mobile (16) au TRNC (21) est approuvée inclut un envoi d'un message de confirmation de relocalisation (58) directement du TRNC (21) au SRNC (12) par l'interface lux (11).

12. La méthode de transfert intercellulaire rapide selon la revendication 1, comprenant en outre les étapes de:
- terminer l'appel;
- commuter (47, 68) la station mobile en mode en attente de paquets;
- acquérir (48, 69) une information de système par paquets PSI par la station mobile (16) dans sa nouvelle cellule; et
- amorcer (70) une procédure de mise à jour de zone de routage par la station mobile, si requis.

13. La méthode de transfert intercellulaire rapide selon la revendication 1, comprenant les étapes de:
- mettre en oeuvre une interface lux (11) entre le SRNC et le TRNC pour faire passer des signaux de commande;
- le SRNC (12) avertissant (53) le TRNC (21) qu'une relocalisation de la station mobile (16) au TRNC (21) est demandée par un envoi d'un message de demande de relocalisation directement du SRNC (12) au TRNC (21) par l'interface lux (11);
- déterminer (54) si les ressources radio sont disponibles dans le TRNC (21) pour servir la station mobile (16);
- les ressources radio requises pour servir la station mobile dans le TRNC étant réservées (54) lorsqu'il est établi que les ressources radio sont disponibles; et
- le TRNC (21) avertissant le SRNC (12) qu'une relocalisation de la station mobile (16) au TRNC (21) est approuvée en envoyant un message de confirmation de relocalisation (58) directement du TRNC (21) au SRNC (12) par l'interface lux (11); et
- envoyer, du SRNC (12) à la station mobile (16), des informations requises par la station mobile pour un transfert intercellulaire.

14. La méthode de transfert intercellulaire rapide selon la revendication 13, comprenant en outre:
- donner instruction au SRNC de désaffecter toutes ressources radio ayant été utilisées par la station mobile dans le SRNC avant le transfert intercellulaire en envoyant un message de désaffection des ressources directement du TRNC au SRNC par l'interface lux.

15. La méthode de transfert intercellulaire rapide selon la revendication 13, comprenant en outre, après l'étape de déterminer si les ressources radio sont disponibles dans le TRNC (21) pour servir la station mobile (16), les étapes de:
- avertir le SRNC que la tentative de transfert intercellulaire a échoué, lorsqu'il a été déterminé que des ressources radio ne sont pas disponibles dans le TRNC pour servir la station mobile;
- sélectionner par le SRNC, un second TRNC qui est un prochain meilleur candidat pour effectuer un transfert intercellulaire de la station mobile; et
- tenter de transférer la station mobile au second TRNC.

16. La méthode de transfert intercellulaire rapide selon la revendication 13, comprenant en outre les étapes de:
- terminer l'appel;
- commuter la station mobile en mode en attente de paquets (68);
- acquérir (69) une information de système par paquets PSI par la station mobile (16) dans sa nouvelle cellule; et
- amorcer une procédure de mise à jour de zone de routage (70) par la station mobile (16), si requis.

17. Un réseau à accès radio pour fournir à des stations mobiles un accès à un réseau de service général de radiocommunication par paquets amélioré appelé réseau EGPRS, ledit réseau à accès radio comprenant:
- un contrôleur de réseau radio source SRNC (12) pour fournir un service aux stations mobiles à travers au moins une station d'émission-réception de base BTS (13 à 15);
- un contrôleur de réseau radio cible TRNC (21) qui fournit un service aux stations mobiles à travers au moins un BTS (22 à 24);
- des moyens pour avertir (33, 34, 53) le TRNC (21) par le SRNC (12) qu'une relocalisation de la station mobile (16) au TRNC (21) est demandée;
- des moyens pour réserver (35, 54) par le TRNC (21), des ressources radio requises pour servir la station mobile (16) dans le TRNC (21);
- des moyens pour avertir (36, 37, 58) le SRNC (21) par le TRNC qu'une relocalisation de la station mobile (16) au TRNC (21) est approuvée;
- des moyens pour avertir (43, 63) le réseau EGPRS (27) qu'un transfert intercellulaire est en cours du SRNC (12) au TRNC (21);
- des moyens pour dupliquer l'envoi (38, 44, 37, 64) d'unités de données par paquets par le réseau EGPRS à la fois au SRNC (12) et au TRNC (21) jusqu'à ce que le TRNC (21) avertisse que le transfert intercellulaire est complété;
- des moyens pour transférer intercellulairement (62, 42) la station mobile (16) au TRNC (21); et
- des moyens pour avertir (45, 65) le réseau EGPRS par le TRNC (21) que le transfert intercellulaire est complété.

18. Le réseau à accès radio selon la revendication 17, comprenant une interface lux (11) et adapté pour faire passer des messages de relocalisation entre le SRNC (12) et le TRNC (21) à travers l'interface lux (11) lorsqu'une des stations mobiles est transférée intercellulairement du SRNC (12) au TRNC (21).

19. Le réseau à accès radio de la revendication 18, dans lequel l'interface lux (11) passe aussi des informations de charge utile entre le SRNC (12) et le TRNC (21).

20. Le réseau à accès radio de la revendication 19, dans lequel le SRNC (12) comprend des moyens pour mettre en mémoire tampon des unités de données par paquets pendant une période d'interruption de transfert intercellulaire, et pour expédier les unités de données par paquets mises en mémoire tampon au TRNC (21) après qu'un transfert intercellulaire de la station mobile (16) soit complété.
